Europäisches Patentamt

(19) European Patent Office

Office européen des brevets

(11) Numéro de publication : **0 011 544
B1**

(12) **FASCICULE DE BREVET EUROPÉEN**

(45) Date de publication du fascicule du brevet :
**15.12.82**

(21) Numéro de dépôt : **79400825.0**

(22) Date de dépôt : **06.11.79**

(51) Int. Cl.³ : **B 65 D 30/24**

(54) **Valve de sécurité pour emballage.**

(30) Priorité : **09.11.78 FR 7831744**

(43) Date de publication de la demande :
**28.05.80 (Bulletin 80/11)**

(45) Mention de la délivrance du brevet :
**15.12.82 Bulletin 82/50**

(84) Etats contractants désignés :
**DE GB NL SE**

(56) Documents cités :
**FR A 2 235 064**
**US A 2 713 953**
**US A 3 174 641**

(73) Titulaire : **Derigon Industries, société anonyme
60, boulevard Berthelot
CLERMONT-FERRAND (Puy-de-Dôme) (FR)**

(72) Inventeur : **Derigon Industries, société anonyme
60, boulevard Berthelot
CLERMONT-FERRAND (Puy-de-Dôme) (FR)**

(74) Mandataire : **Descourtieux, Philippe
CABINET BEAU de LOMENIE 55, rue d'Amsterdam
F-75008 Paris (FR)**

Valve de sécurité pour emballage

La présente invention concerne une valve de sécurité bidirectionnelle, particulièrement adaptée à être montée sur un emballage, par exemple souple.

On sait que certaines denrées, par exemple le café, dégagent des gaz qui, lorsqu'elles sont emballées, risqueraient de gonfler et de déchirer les sachets qui les contiennent, si on ne prévoyait sur ceux-ci des valves susceptibles d'évacuer ces gaz vers l'extérieur au-dessus d'un certain seuil de pression à l'intérieur des sachets, comme cela est par exemple décrit dans les brevets US-A-2 638 263 et US-A-2 713 953.

Les valves connues, notamment par le brevet US-A-2 713 953 comportent deux parties, la première destinée à être fixée sur l'emballage, la deuxième en forme de couvercle, se fixant à son tour sur la première. Des manchons cylindriques solidaires respectivement de la première et de la seconde partie coopèrent l'un avec l'autre pour assurer l'étanchéité de la valve. Toutefois, les valves connues par le document rappelé plus haut ne peuvent être montées que sur des bouteilles ou analogues et leur couvercle doit être amovible pour permettre le vidage du récipient. Le couvercle doit donc présenter une rigidité relativement élevée qui limite l'application de la valve et empêche pratiquement son utilisation, sur des emballages souples.

La présente invention vise au contraire à proposer une valve, destinée uniquement à assurer la sécurité des emballages vis-à-vis des surpressions intérieures ; ce but limité permet alors de simplifier la fabrication de la valve tout en améliorant son fonctionnement et en permettant son utilisation sur toutes sortes d'emballages.

Selon l'invention, la première partie de la valve est relativement rigide cependant que la seconde partie est réalisée en matériau souple et présente au moins une zone annulaire souple et élastiquement déformable solidaire du second manchon cylindrique. L'un au moins de ces manchons présente une forme convexe dans la zone où il coopère avec l'autre manchon, cependant qu'au moins deux ouvertures sont prévues respectivement dans la première partie et dans la zone annulaire de la seconde partie et sont disposées de part et d'autre de la zone de contact des manchons.

Ainsi, sous l'effet d'une surpression dans l'emballage, la zone annulaire souple se déforme, entraînant avec elle le manchon, les parties en contact des manchons se détachant l'une de l'autre pour livrer un passage au fluide depuis une ouverture de la première partie avec une ouverture de la deuxième partie et assurer ainsi l'évacuation dudit fluide à l'extérieur de l'enceinte.

Ledit second manchon peut être intérieur ou extérieur audit premier manchon. De même, les ouvertures mettant en communication l'intérieur de la valve avec l'extérieur sont telles que celle ou celles pratiquées dans ladite première partie de valve sont intérieures ou extérieures auxdits manchons, celles pratiquées dans la seconde partie de valve étant alors extérieures ou intérieures aux manchons.

Dans un mode avantageux de réalisation, la seconde partie de valve est réalisée sous la forme d'un couvercle encliquetable sur ladite première partie. Ce couvercle peut éventuellement être relié à la première partie par une languette. De préférence, lesdites première et seconde parties sont en une matière synthétique et ladite languette, lorsqu'elle existe, vient de moulage avec elles.

Les figures du dessin annexé feront bien comprendre comment l'invention peut être réalisée :

la figure 1 montre en perspective un mode de réalisation préféré de la valve selon l'invention ;

les figures 2 et 3 sont des demi-coupes axiales, respectivement en position ouverte et en position fermée, du mode de réalisation de la figure 1 ;

les figures 4 et 5 montrent, en demi-coupes axiales, une variante de réalisation, respectivement en position fermée et en position ouverte ;

les figures 6 et 7 sont des vues correspondantes d'une autre variante de réalisation.

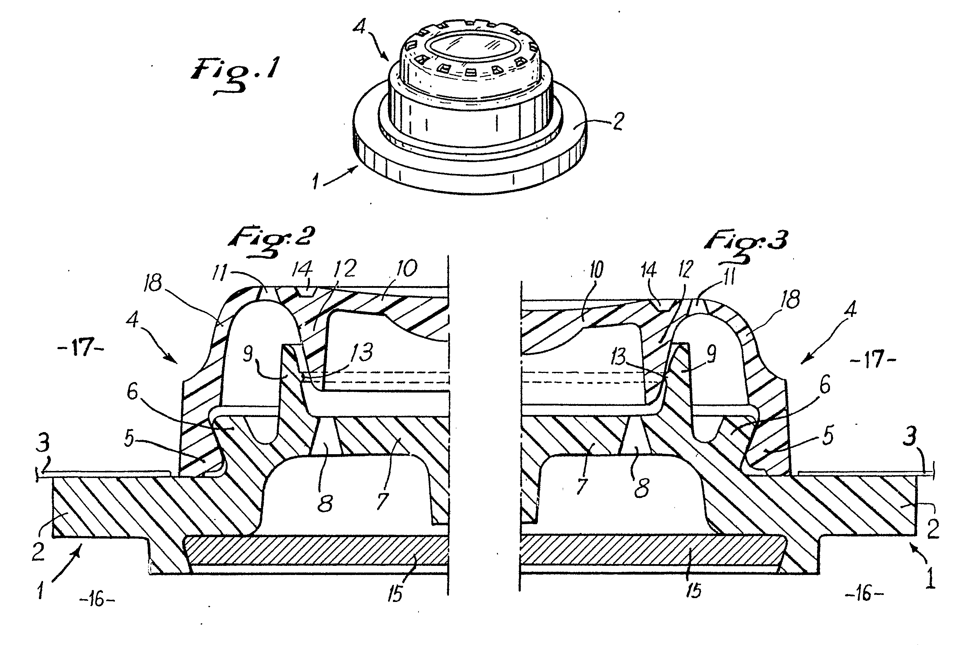

La valve selon l'invention, montrée par les figures 1 à 3, comporte une première partie fixe 1, comportant une bride 2 destinée à sa fixation sur une paroi 3, par exemple par soudage thermique ou par ultrasons et une seconde partie 4, réalisée sous la forme d'un couvercle ou capuchon, encliquetable à sa périphérie sur la partie 1, grâce à des rebords à encliquetage coopérants 5 et 6.

Les parties de valve 1 et 4 peuvent être réalisées par moulage d'une matière synthétique et elles peuvent être reliées l'une à l'autre par une languette de liaison non représentée.

En regard de la partie 4, la partie 1 est obturée par un fond 7, percé de trous périphériques 8.

A l'extérieur des trous 8, le fond 7 est solidaire d'un manchon 9, saillant en direction de la partie 4. De même, le couvercle 4 comporte un fond 10, percé de trous périphériques 11. A l'intérieur des trous 11, le fond 10 est solidaire d'un manchon 12, saillant en direction du fond 7 de la partie 1. Le manchon 12 est coaxial au manchon 9 et intérieur à celui-ci.

Les faces éventuellement en regard des manchons 9 et 12, c'est-à-dire la face intérieure du manchon 9 et la face extérieure du manchon 12, peuvent être écartées l'une de l'autre lorsque le fond 10 est soulevé vers l'extérieur (figure 2) ou peuvent être partiellement en appui l'une sur l'autre lorsque le fond 10 est attiré vers le fond 7 (figure 3). Dans ce dernier cas, l'étanchéité est assurée par la valve entre les deux espaces séparés par la paroi 3.

Pour obtenir une bonne étanchéité, il est avantageux que les faces en regard des manchons 9 et 12, au moins dans la zone de leur contact mutuel, présentent en section la forme d'ellipses. Cette étanchéité peut encore être améliorée en prévoyant, au moulage, un bourrelet 13 agissant comme un joint torique, par exemple sur la face intérieure du manchon 9.

Pour augmenter la souplesse du couvercle 4, plus particulièrement de la zone annulaire 18 reliant le fond 10 au bourrelet 5, et donc la sensibilité de la valve selon l'invention, on prévoit une rainure périphérique 14 dans la face extérieure du couvercle 4, au voisinage du manchon 12.

Un filtre 15 destiné à ne laisser passer que les gaz et à retenir les poussières peut être prévu. Il peut être fixé par encliquetage sur la partie fixe 1.

On voit ainsi que, lorsque la pression du gaz contenu dans l'espace 16 disposé au-dessous de la paroi 3 (par rapport aux figures 2 et 3) est supérieure à la pression du gaz régnant dans l'espace 17 disposé au-dessus, le fond 10 se soulève vers l'extérieur grâce à la déformation de la zone annulaire souple 18, sous l'effet du gaz traversant les trous de communication. Il en résulte que le gaz peut s'écouler de l'espace 16 vers l'espace 17 en passant à travers les trous 8, entre les manchons 9 et 12, puis à travers les trous 11 (figure 2).

En revanche, lorsque la pression du gaz contenu dans l'espace 16 est inférieure à la pression du gaz contenu dans l'espace 17, le fond 10 est attiré vers le fond 7 et les manchons 9 et 12 sont en appui l'un contre l'autre en assurant l'étanchéité parfaite entre les espaces 16 et 17 (figure 3).

La valve selon l'invention est donc particulièrement appropriée à être utilisée sur la paroi 3 de sacs ou sachets d'emballage. Dans ce cas, l'espace 16 représente l'intérieur du sac ou sachet et l'espace 17 l'atmosphère environnante.

Le produit (non représenté) enfermé à l'intérieur d'un tel sachet est initialement mis sous vide de façon que l'on se trouve dans la position de la figure 3 pour laquelle la valve isole les deux espaces 16 et 17. On remarquera que la mise sous vide de l'intérieur du sachet peut être réalisée en enceinte au moment du remplissage du sachet et avant fermeture de celui-ci, ou bien à travers la valve après remplissage et fermeture du sachet.

Si le produit emballé dégage du gaz et si la pression de celui-ci devient supérieure à la pression atmosphérique, la valve s'ouvrira (figure 2) pour exercer sa fonction de sécurité. On remarquera qu'il en sera de même, si l'on presse le sachet, ce qui permettra de sentir l'arôme du produit emballé, véhiculé par les gaz sortant alors de la valve.

Dans la variante de réalisation des figures 4 et 5, le manchon 12' du couvercle 4' se trouve à l'extérieur du manchon 9' de la partie 1', les trous 8' restant à l'intérieur du manchon 9' et les trous 11' à l'extérieur du manchon 12'. Dans ce cas, la partie centrale du fond 7' et le fonctionnement de la soupape 9', 12' est due à la déformation élastique de la partie périphérique 18' du couvercle 4'.

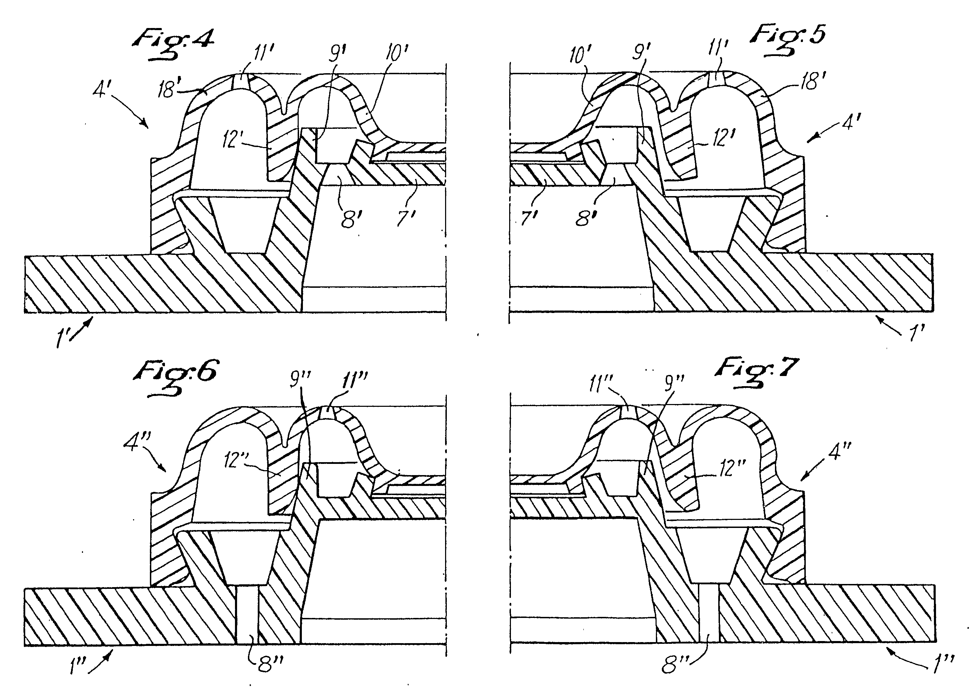

La variante de réalisation des figures 6 et 7 est semblable à celle des figures 4 et 5, à ceci près que les trous 8″ se trouvent alors à l'extérieur du manchon 9″ et que les trous 11″ sont disposés à l'intérieur du manchon 12″.

## Revendications

1. Valve de sécurité pour emballage, destinée à être disposée sur une paroi étanche, notamment une paroi souple, comportant d'une part, une première partie (1, 1', 1″) destinée à être fixée sur ladite paroi et pourvue d'un premier manchon cylindrique (9, 9', 9″) et, d'autre part, une seconde partie (4, 4', 4″) en forme de couvercle dont la périphérie (5) au moins est susceptible d'être solidarisée de la périphérie (6) de ladite première partie, ladite seconde partie (4, 4', 4″) comportant un second manchon cylindrique (12, 12', 12″) coaxial au premier et susceptible de coopérer avec lui pour assurer l'étanchéité, caractérisée en ce que ladite première partie (1, 1', 1″) est relativement rigide et en ce que ladite seconde partie (4, 4', 4″) est réalisée en matériau souple et présente au moins une zone annulaire souple (18) et élastiquement déformable solidaire du second manchon (12, 12', 12″), l'un au moins desdits manchons (9, 9', 9″-12, 12', 12″) présentant une forme convexe dans la zone (13) où il coopère avec l'autre manchon, cependant qu'au moins deux ouvertures (8, 8', 8″-11, 11', 11″) sont prévues respectivement dans la première partie (1, 1', 1″) et dans la zone annulaire de la seconde partie (4, 4', 4″) et sont disposées de part et d'autre de la zone de contact (13) des manchons (9, 9', 9″-12, 12', 12″), de sorte que, sous l'effet d'une surpression dans l'emballage, la zone annulaire souple se déforme, entraînant avec elle le manchon (12, 12', 12″), les parties en contact des manchons (9, 9', 9″-12, 12', 12″) se détachant l'une de l'autre pour livrer un passage au fluide depuis l'ouverture (8, 8', 8″) de la première partie vers l'ouverture (11, 11', 11″) de la deuxième partie et assurer ainsi l'évacuation dudit fluide à l'extérieur de l'enceinte.

2. Valve selon la revendication 1, caractérisée en ce que le premier manchon (9) est extérieur au second (12).

3. Valve selon la revendication 1, caractérisée en ce que le premier manchon (9', 9″) est intérieur au second (12', 12″).

4. Valve selon l'une quelconque des revendications précédentes, caractérisée en ce que les ouvertures (8, 8') de passage de gaz pratiquées dans ladite première partie (1, 1') sont situées à l'intérieur du volume délimité par le premier manchon (9, 9') tandis que les ouvertures (11, 11') de passage de gaz prévues dans ladite seconde partie (4, 4') sont situées à l'extérieur du volume délimité par le second manchon (12, 12').

5. Valve selon l'une quelconque des revendications 1 à 3, caractérisée en ce que les ouvertures (8″) de passage de gaz pratiquées dans ladite première partie (1″) sont situées à l'extérieur du volume délimité par le premier manchon (9''), tandis que les ouvertures (11'') de passage de gaz prévues dans ladite seconde partie (4'') sont situées à l'intérieur du volume délimité par le second manchon (12'').

6. Valve selon la revendication 1, caractérisée en ce qu'au moins l'un des manchons (9-12) comporte sur sa face en regard de l'autre au moins un bourrelet périphérique (13), agissant à la manière d'un joint torique.

7. Valve selon la revendication 1, caractérisée en ce que la portion centrale de la deuxième partie (4, 4', 4'') est fixée, par exemple par encliquetage, sur la portion centrale de la première partie (1, 1', 1'').

## Claims

1. Safety valve for packages, meant to be placed on an impervious wall, for example a supple wall, comprising on the one hand, a first part (1, 1', 1'') meant to be fixed on said wall and provided with a first cylindrical sleeve (9, 9', 9'') and, on the other hand, a second part (4, 4', 4'') shaped as a cover of which the periphery (5) at least is adapted to be secured to the periphery (6) of said first part, said second part (4, 4', 4'') comprising a second cylindrical sleeve (12, 12', 12'') co-axial to the first and adapted to cooperate therewith to ensure tightness, characterised in that said first part (1, 1', 1'') is relatively rigid and in that said second part (4, 4', 4'') is made of supple material and presents at least a supple annular zone (18) which is elastically deformable and fast with the second sleeve (12, 12', 12''), one at least of said sleeves (9, 9', 9''-12, 12', 12'') having a convex shape in the zone (13) where it cooperates with the other sleeve, whereas at least two openings (8, 8' 8''-11, 11', 11'') are provided, respectively in the first part (1, 1', 1'') and in the annular zone of the second part (4, 4', 4'') and are placed on either sides of the contact zone (13) of the sleeves (9, 9', 9''-12, 12', 12''), so that, under the effect of an overpressure in the package, the supple annular zone becomes deformed, taking with it the sleeve (12, 12', 12''), the contacting parts of the sleeves (9, 9', 9''-12, 12', 12'') separating one from the other to let the fluid through from the opening (8, 8', 8'') of the first part towards the opening (11, 11', 11'') of the second part, thus ensuring the discharge of said fluid outside the enclosure.

2. Valve according to claim 1, characterised in that the first sleeve (9) is external to the second (12).

3. Valve according to claim 1, characterised in that the first sleeve (9', 9'') is internal to the second (12', 12'').

4. Valve according to any one of the receding claims, characterised in that the openings (8, 8') for the passage of gas provided in the first part (1, 1') are situated inside the volume defined by the first sleeve (9, 9') whereas the openings (11, 11') for the passage of gas provided in the said second part (4, 4') are situated outside the volume defined by the second sleeve (12, 12').

5. Valve according to any one of claims 1 to 3, characterised in that the openings (8'') for the passage of gas provided in the said first part (1'') are situated outside the volume defined by the first sleeve (9''), whereas the openings (11'') for the passage of gas provided in the said second part (4'') are situated inside the volume defined by the second sleeve (12'').

6. Valve according to claim 1, characterised in that at least one of the sleeves (9-12) comprises on its face opposite the other at least a peripheral bead (13) acting as an O-ring.

7. Valve according to claim 1, characterised in that the middle portion of the second part (4, 4', 4'') is fastened for example by clipping over the middle portion of the first part (1, 1', 1'').

## Ansprüche

1. Sicherheitsventil, insbesondere für eine Verpackung, an einer dichten Wand, insbesondere einer biegsamen Wand, mit einem ersten Teil (1, 1', 1''), das an der Wand zu befestigen und mit einer ersten zylindrischen Hülse (9, 9', 9'') versehen ist, und mit einem zweiten Teil (4, 4', 4'') in Deckelform, von dem wenigstens der Umfang (15) am Umfang (6) des ersten Teils befestigt werden kann, wobei das zweite Teil (4, 4', 4'') eine zweite zylindrische Hülse (12, 12', 12'') aufweist, die zur ersten Hülse koaxial ist und mit ihr zur Herstellung der Abdichtung zusammenarbeiten kann, dadurch gekennzeichnet, daß das erste Teil (1, 1', 1'') verhältnismäßig steif ist und daß das zweite Teil (4, 4', 4'') aus biegsamem Material hergestellt ist und wenigstens eine biegsame elastisch verformbare ringförmige Zone (18) aufweist, die mit der zweiten Hülse (12, 12', 12'') einstückig ausgebildet ist, wobei wenigstens eine der Hülsen (9, 9', 9''-12, 12', 12'') eine konvexe Form in der Zone (13) hat, in der sie mit der anderen Hülse zusammenarbeiten, während wenigstens zwei Öffnungen (8, 8', 8''-11, 11', 11'') im ersten Teil (1, 1', 1'') bzw. in der ringförmigen Zone des zweiten Teils (4, 4', 4'') vorgesehen und beiderseits der Berührungszone (13) der Hülsen (9, 9', 9''-12, 12', 12'') derart angeordnet sind, daß unter der Wirkung eines Überdrucks in der Verpackung sich die ringförmige biegsame Zone verformt und die Hülse (12, 12', 12'') mit sich mitnimmt, wobei sich die in Berührung stehenden Teile der Hülsen (9, 9', 9''-12, 12', 12'') voneinander lösen und einen Fluiddurchtritt von der Öffnung (8, 8', 8'') des ersten Teils zur Öffnung (11, 11', 11'') des zweiten Teils freigeben und somit die Entleerung des Fluids zur Außenseite des Behälters gewährleisten.

2. Ventil nach Anspruch 1, dadurch gekennzeichnet, daß die erste Hüle (9) außerhalb der zweiten Hülse (12) angeordnet ist.

3. Ventil nach Anspruch 1, dadurch gekennzeichnet, daß die erste Hülse (9', 9'') innerhalb der zweiten Hülse (12', 12'') angeordnet ist.

4. Ventil nach einem der vorhergehenden Ansprüche, dadurch gekennzeichnet, daß die im ersten Teil (1, 1') ausgebildete Gasdurchtrittsöffnung (8, 8') sich innerhalb des durch die erste Hülse (9, 9') begrenzten Volumens befinden, während die im zweiten Teil (4, 4') vorgesehenen Gasdurchtrittsöffnungen (11, 11') sich außerhalb des durch die zweite Hülse (12, 12') begrenzten Volumens befinden.

5. Ventil nach einem der Ansprüche 1 bis 3, dadurch gekennzeichnet, daß die im ersten Teil (1'') ausgebildeten Gasdurchtrittsöffnungen (8'') sich außerhalb des durch die erste Hülse (9'') begrenzten Volumens befinden, während die im zweiten Teil (4'') vorgesehenen Gasdurchtrittsöffnungen (11'') sich innerhalb des durch die zweite Hülse (12'') begrenzten Volumens befinden.

6. Ventil nach Anspruch 1, dadurch gekennzeichnet, daß wenigstens eine der Hülsen (9-12) an ihrer der anderen Hülse zugewandten Fläche wenigstens einen Umfangswulst (13) aufweist, der nach Art einer Ringdichtung wirkt.

7. Ventil nach Anspruch 1, dadurch gekennzeichnet, daß das Mittelteil des zweiten Teils (4, 4', 4'') beispielsweise durch Einrasten am Mittelteil des ersten Teils (1, 1', 1'') befestigt ist.

Fig.1

Fig.2

Fig.3

0 011 544

Fig: 4

Fig: 5

Fig: 6

Fig: 7

0 011 544